# EUROPÄISCHE PATENTSCHRIFT

(11) **EP 2 157 241 B1**
(45) Veröffentlichungstag und Bekanntmachung des Hinweises auf die Patenterteilung: **07.09.2016**
(21) Anmeldenummer: 08019011.9
(22) Anmeldetag: 30.10.2008
(51) Int. Cl.: E01C 19/48, B65G 69/20

(54) **Förderanlage**
Transport device
Dispositif transporteur

(30) Priorität: 12.08.2008 DE 202008010719 U
(43) Veröffentlichungstag der Anmeldung: 24.02.2010
(73) Patentinhaber: Joseph Vögele AG, 67067 Ludwigshafen (DE)
(72) Erfinder: Fickeisen, Steffen, 67098 Bad Dürkheim (DE)
(74) Vertreter: Grünecker Patent- und Rechtsanwälte PartG mbB

(56) Entgegenhaltungen:
- US-A- 5 988 935
- US-B2- 7 300 225

## Beschreibung

Die Erfindung betrifft eine Förderanlage gemäß Oberbegriff des Anspruchs 1.

Die aus US 5,988,935 A bekannte Förderanlage weist eine Primärheizvorrichtung in Form einer Gasheizung auf, und zusätzlich eine elektrische Heizung. Die elektrische Heizung wird so eingesetzt, dass sie über Nacht oder über ein Wochenende betrieben wird, wenn also die Gasheizung aus Sicherheitsgründen nicht betrieben werden kann. Ein gemeinsamer Einsatz beider Heizvorrichtungen ist nicht offenbart.

Bei einer aus US 7,300,225 B2 bekannten Förderanlage werden brennbare Dämpfe, die beim Verarbeiten des Straßenbau-Einbauguts abgegeben werden, gesammelt und in eine Brennkammer eingebracht, die mit den Abgasen des Brennkraftmotors gespeist wird. Die heißen Abgase des Brennkraftmotors verbrennen die angesaugten Dämpfe. Der dadurch entstehende heiße Abgasstrom wird zum Beheizen zumindest des Förderkanals durch diesen geblasen und dann über ein Abgasrohr in die Atmosphäre abgeleitet. Aufgrund unvermeidlicher Spalte und Öffnungen der Förderanlage entweichen Abgase direkt in die Umgebung, was nach modernen Umweltschutzvorschriften nicht zulässig ist. Diese mit Verbrennen der Dämpfe durch die heißen Abgase des Brennkraftmotors betriebene Heizvorrichtung ist die einzige Heizvorrichtung der Förderanlage.

Es ist aus DE-U-295 19 719 bei mobilen Förderanlagen für Beschicker für den Straßenbau, bekannt, z.B. bituminöses, heiß verarbeitetes Einbaugut mit dem Förderelement zu transportieren und beim Transport mit einer Primärheizvorrichtung zu heizen, wie mit einer mit Flüssiggas oder elektrisch betriebenen Heizvorrichtung. Bei einem auf Tragrollen und Umlenkrollen laufenden Förderband verringert die Beheizung das Verkleben oder Festkleben des Gutes am Förderelement und den Rollen, so dass sich Reinigungsarbeiten einfacher gestalten und/oder die Frequenz von Reinigungszyklen verringern lassen. Wird die Förderanlage mit einem Brennkraftmotor betrieben, oder ist die Förderanlage in eine Maschine, wie einen Beschicker, eingegliedert, die als Antriebsquelle einen Brennkraftmotor verwendet, dann wird die Motorabwärme (aus dem Kühlsystem und dem Abgassystem, und von anderen, direkt oder indirekt vom Motor getriebenen, Abwärme generierenden Komponenten) ungenutzt in die Umgebung abgegeben.

Aus US 7 300 225 B2 ist es bekannt, in einem eine heiße bituminöse Gutmischung transportierenden Fahrzeug mit einem Brennkraftmotor den Boden eines Kanals einer Förderanlage dadurch zu beheizen, dass brennbare heiße Dämpfe des Einbaugutes abgesaugt, mit heißen Abgasen des Brennkraftmotors unter positivem Zuführdruck vermischt und in einem Verbrennungsbereich verbrannt werden. Die Wärme der Abgase und aus dem Verbrennungsprozess wird dem Boden des Förderkanals entlang geführt und dann in die Atmosphäre abgegeben. Dieses Heizsystem ist die einzige Heizvorrichtung der Förderanlage. Das Durchführen und Emittieren von Abgasen und Verbrennungsrückständen durch die und aus der Förderanlage ist aus Umweltschutzgründen außerordentlich bedenklich.

Aus DD 230 990 A ist es bekannt, bei einem selbstfahrenden Mähdrescher mehrere Förderbandetagen zur Förderung von Fruchthüllen vorzusehen. Diesen Förderbandetagen und den darauf gleitenden Fruchthüllen wird im Gegenstromprinzip warme Abluft vom Brennkraftmotor zugeführt, um die Fruchthüllen oder Samen zum leichteren Dreschen zu konditionieren.

Der Erfindung liegt die Aufgabe zugrunde, eine Förderanlage der eingangs genannten Art anzugeben, deren Beheizung auf umweltfreundliche Weise mit Energieeinsparung möglich ist.

Die gestellte Aufgabe wird mit den Merkmalen des Anspruchs 1 gelöst.

Hiermit wird die bisher ungenutzte Abwärme des Brennkraftmotors in einer Sekundärheizvorrichtung der Förderanlage zur zumindest teilweisen Entlastung der vorgesehenen Primärheizvorrichtung eingesetzt. Damit lässt sich die zum Betrieb der Primärheizvorrichtung erforderliche Energie reduzieren oder braucht, unter idealen Voraussetzungen, die Primärheizvorrichtung zumindest zeitweise überhaupt nicht mehr betrieben zu werden. Von der Abwärme des Brennkraftmotors kann natürlich auch aus dem Abgassystem austretende Abwärme verwendet werden, jedoch ohne Abgase direkt in die Sekundärheizvorrichtung einzuleiten. Die Förderanlage lässt sich mit der Kombination aus der Primärheizvorrichtung und der Motorabwärme-Sekundärheizvorrichtung umweltfreundlich beheizen, da die Primärheizvorrichtung, die der Brennkraftmotor beispielsweise über einen Generator mit elektrischer Leistung versorgt, durch die Sekundärheizvorrichtung erheblich entlastet wird bzw. unter idealen Konditionen zumindest zeitweise vollständig außer Betrieb genommen werden kann. Es wird in doppeltem Sinn Energie eingespart und die Umwelt entlastet, da der ohnedies zu betreibende Brennkraftmotor seine unvermeidbare, jedoch in einer gewissen Proportion zur Motorbelastung stehende Abwärme (ohne die Abgase direkt einzuleiten) für die Sekundärheizvorrichtung der Förderanlage bereitstellt, so dass die elektrische Primärheizanlage weniger Strom verbraucht, wodurch wegen geringerer Motorbelastung der Brennstoffverbrauch reduziert werden kann. Die Primärheizvorrichtung arbeitet ohnedies umweltfreundlich, da bei der Wärmeerzeugung gegebenenfalls keine Abgase entstehen, der Wirkungsgrad gut ist, und die Wärme sehr gut dosiert und ausgerichtet werden kann.

Bei einer zweckmäßigen Ausführungsform ist ein vom Brennkraftmotor in den Bereich des Förderelementes führendes Motor-Abluftsammel- und/oder -Leitsystem vorgesehen, in welchem die Abwärme des Brennkraftmotors in Luft gesammelt und als heiße Luftströmung in den Bereich des Förderelementes geleitet wird. Die Luftströmung ist Träger der Wärmeenergie, wobei keine Abgase des Brennkraftmotors in der Luftströmung enthalten sind, um die Sekundärheizvorrichtung umweltfreundlich zu betreiben.

Dieses Motor-Abluftsammel- und -Leitsystem sollte zweckmäßig auch die Abwärme sammeln, die vom Komponenten generiert wird, die der Brennkraftmotor direkt oder indirekt antreibt, beispielsweise aus der folgenden Gruppe: Bremsen, Abgasleitungen, Komponenten des Antriebs, Hydromotoren, Pumpen, Generatoren, Transformatoren. Auf diese Weise wird vermieden, zwangsweise im Betrieb der Förderanlage oder des Fahrzeuges, in das die Förderanlage integriert ist, generierte Abwärme ungenutzt in die Atmosphäre abzugeben. Vielmehr wird auch diese Abwärme in der Sekundärheizvorrichtung zur Einwirkung auf die Förderanlage, d.h. deren Bestandteile und gegebenenfalls auch das Fördergut, gebracht.

Im Hinblick auf die Umweltfreundlichkeit der Förderanlage ist es zweckmäßig, als Primärheizvorrichtung eine elektrische Heizvorrichtung oder eine Gasheizvorrichtung zu verwenden. Solche Heizsysteme zeichnen sich dadurch aus, dass sie einen günstigen Wirkungsgrad haben und die Umwelt nur geringfügig belasten.

Bei einer zweckmäßigen Ausführungsform weist die elektrische Primärheizvorrichtung wenigstens einen, vorzugsweise von dem Brennkraftmotor, angetriebenen, Generator und vom Generator versorgte Infrarotstrahler und/oder Flächenheizkörper und/oder Heizbänder oder -Stäbe auf. Eine solche elektrische Primärheizvorrichtung bietet den Vorteil, dass beim Erzeugen von Wärme keine Abgase entstehen, und dass sich die erzeugte Wärme gezielt zu den Bereichen der Förderanlage bringen lässt, in denen sie effizient wirkt.

Bei einer bevorzugten Ausführungsform sind die Primärheizvorrichtung vorwiegend der Oberseite und die Sekundärheizvorrichtung vorwiegend der Unterseite des Förderelementes zugeordnet. Alternativ könnten die Zuordnungen umgekehrt gewählt werden. Vorzugsweise handelt es sich beim Förderelement um ein auf Tragrollen und Umlenkrollen angeordnetes Gummiförderband in einem Steigförderkanal. Die Primärheizvorrichtung beheizt das obere Trum des Förderbandes, gegebenenfalls das Fördergut, und die Bereiche zwischen dem Förderband und den Tragrollen bzw. Umlenkrollen, in denen die Relativbewegungen auftreten, mit denen verschmutztes Fördergut überhaupt erst eindringen kann, während die Sekundärheizvorrichtung beispielsweise gezielt das untere Trum des Förderbandes, und um dieses herum auch die Tragrollen und Umlenkrollen von unten her beheizt, beispielsweise um bereits angehaftetes Fördergut bis zum selbsttätigen Abschmelzen aufzuheizen und zusätzlich von unten her einen Wärmeschild aufzubauen, durch den die Primärheizvorrichtung für eine effiziente Beheizung von oben weniger Energieeinsatz benötigt.

Bei einer zweckmäßigen Ausführungsform ist der Brennkraftmotor in einer unterhalb eines Förderkanals angeordneten, isolierten Motorstation gekapselt untergebracht. Die Motorstation weist wenigstens einen, vorzugsweise zum Boden weisenden, Umgebungslufteinlass auf, um durch Thermik Umgebungsluft anzusaugen und hochsteigen zu lassen, oder sogar unterstützt durch ein Gebläse. Alternativ könnten die erwähnten und zusätzlichen Komponenten anders angeordnet sein. Ferner kann die Motorstation mit dem Motor-Abwärmesammel- und -Leitsystem kombiniert werden, das sich z. B. zwischen dem Brennkraftmotor und der Unterseite des Förderelementes befindet. Zu den im Betrieb des Brennkraftmotors zwangsweise Wärme erzeugenden Komponenten gehört auch das Abgassystem des Brennkraftmotors. Allerdings werden die Abgase des Brennkraftmotors nicht direkt in die Sekundärheizvorrichtung eingeleitet, sondern wird nur aus dem Abgassystem entnehmbare Abwärme in die Sekundärheizvorrichtung gebracht, beispielsweise über Wärmetauscher oder dgl., so dass in der Förderanlage keine die Umwelt belastenden oder toxischen Motorabgase strömen. Die Sekundärheizvorrichtung ist somit eine umweltfreundliche und frei von Abgasen des Brennkraftmotors betriebene Heißluftheizung für die Förderanlage.

Dabei wird die Förderanlage zweckmäßig in einer als Straßenfertiger oder Beschicker ausgebildeten Straßenbaumaschine verwendet, in der der mit Abwärme die Sekundärheizvorrichtung speisende Brennkraftmotor eine direkte oder indirekte Antriebsquelle nicht nur für das Förderelement, sondern auch für Fahr- und Funktionskomponenten des Straßenfertigers oder Beschickers ist. Da dieser Brennkraftmotor aufgrund der mehreren von ihm angetriebenen oder versorgten Verbraucher relativ hohe Ausgangsleistung abgeben muss, das heißt meist mehr Leistung als nur zum Betrieb der Förderanlage erforderlich, generiert er viel Abwärme, die in der Sekundärheizvorrichtung nennenswert zum Beheizen der Förderanlage und zum spürbaren Entlasten der Primärheizvorrichtung beiträgt. Diese Primärheizvorrichtung lässt sich dann gegebenenfalls abschalten.

Anhand der Zeichnungen wird eine Ausführungsform des Erfindungsgegenstandes erläutert. Es zeigen:
- Fig. 1: einen schematischen Querschnitt durch eine mobile Förderanlage, und
- Fig. 2: einen schematischen Längsschnitt durch einen Teil dieser Förderanlage von Fig. 1.

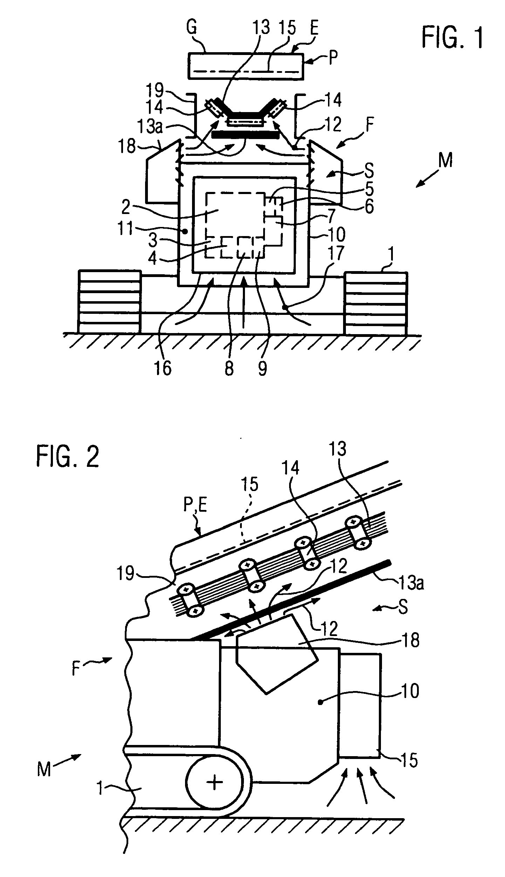

Eine in Fig. 1 und 2 schematisch dargestellte Förderanlage F ist eine in der gezeigten Ausführungsform mobile Förderanlage F, die durch einen Brennkraftmotor 2 antreibbar und gegebenenfalls fahrbar ist. Das erfindungsgemäße Prinzip ist jedoch auch bei nicht mobilen Förderanlagen einsetzbar, die als Antriebsquelle, z. B. auch für einen Schwenkantrieb oder Neigeantrieb, wenigstens einen Brennkraftmotor benützen.

In den Fig. 1 und 2 ist die Förderanlage F beispielsweise in eine Straßenbaumaschine wie einen Straßenfertiger oder einen Beschicker integriert. Auf einem Fahrwerk 1 sind der Brennkraftmotor 2 und die Förderanlage F, gegebenenfalls zusammen mit anderen, nicht näher hervorgehobenen Komponenten und Funktionsteilen, angeordnet. Der Brennkraftmotor 2 kann ein Förderelement 13 der Förderanlage F, beispielsweise ein Gummiförderband auf Tragrollen und Umlenkrollen 14, direkt antreiben, z.B. über ein Getriebe 3, oder über ein Pumpengetriebe 4 mit einer Pumpe, die einen Hydromotor (nicht gezeigt) versorgt. Ferner kann der Brennkraftmotor 2 andere Antriebskomponenten 8 für die Straßenbaumaschine M antreiben. Wie üblich ist ein Kühlsystem 9, z.B. mit Kühlwasser, einem Radiator und einem Gebläse, vorgesehen. Ferner kann der Brennkraftmotor 2 direkt oder über ein nicht gezeigtes Zwischengetriebe einen Generator 7 antreiben, von dem gegebenenfalls wenigstens ein Elektromotor zum Antreiben des Förderelementes 13 der Förderanlage F und/oder anderer Komponenten der Straßenbaumaschine mit elektrischem Strom versorgt werden. Schließlich ist ein Abgassystem 5 des Brennkraftmotors 2 vorgesehen, das nicht näher gezeigte Abgasleitungen aufweist, und beispielsweise mit einem Wärmetauscher 6 zusammenwirkt, der zumindest einen Teil der mit den Abgasen abgegebenen Abwärme des Motors gewinnt. Der Brennkraftmotor 2 kann ein Diesel-, Benzin- oder Gasmotor sein.

Der Brennkraftmotor 2 ist, zweckmäßigerweise, mit den vorerwähnten, im Betrieb Wärme abgebenden Komponenten und Ausstattungsteilen in einer gekapselten Motorstation 10 untergebracht, die eine wärmeisolierende Außenabschirmung 11 und, beispielsweise, bodenseitige, Einlassöffnungen 16 für Umgebungsluft (Pfeil 17) aufweisen kann. Das Kühlsystem 9 des Brennkraftmotors 2 kann ein starkes Gebläse (nicht gezeigt) umfassen, das über den nicht gezeigten Radiator Abwärme in die Motorstation 10 bringt. Gegebenenfalls ist im Bereich der Einlassöffnungen 16 und/oder im Übergang zu Warmluftleitvorrichtungen 18 wenigstens ein weiteres Gebläse vorgesehen, das direkt (über ein Getriebe oder einen Keilriemen) oder indirekt (z.B. elektrisch oder hydraulisch) vom Brennkraftmotor 2 angetrieben wird.

Die Motorstation 10 ist unterhalb, vorzugsweise in der Nähe, eines Förderkanals 19 der Förderanlage F angeordnet und steht über Luftführungen 18 als Teil eines Motor-Abwärmesammel- und -Leitsystems beispielsweise mit einem unteren Bereich des Förderkanals 19 in warmluftübertragender Verbindung.

Die mit der Abwärme des Brennkraftmotors und seiner wärmegenerierenden Ausstattungskomponenten aufgeheizte Abluft strömt (Pfeile 12) von unten und/oder seitlich gegen das Förderelement 13 und die Tragrollen und Umlenkrollen 14, und vorwiegend auch gegen die Oberfläche des unteren Fördertrums 13a des Förderelementes 13.

Das Förderelement 13 muss nicht notwendigerweise ein Gummiförderband auf Trag- und Umlenkrollen sein, sondern könnte auch eine Förderschnecke, ein Kratzerband, ein Metallgewebeband oder dgl. sein. Die Förderanlage F dient, vorzugsweise, zum Fördern eines beim Fördern zum Anhaften neigenden Fördergutes, wie bituminösem erwärmtem Fördergut zum Straßenbau.

Die Förderanlage F weist ein dem Förderelement 13 bzw. dem darauf geförderten Gut und auch den Trag- und Umlenkrollen 14 im Förderkanal 19, z.B. von oben und/oder von unten zugeordnete Primärheizvorrichtung P auf, die beispielsweise eine elektrische Primärheizvorrichtung E oder eine Gasheizvorrichtung G ist. Als elektrische Primärheizvorrichtung P weist diese als Heizelement beispielsweise Infrarotstrahler, Flächenheizkörper, Heizstäbe, Heizbänder 15 oder dgl. auf, die beispielsweise vom Generator 7 des Brennkraftmotors 2, gespeist werden.

Die Primärheizvorrichtung P ist, vorzugsweise, der Oberseite des Förderelementes 13 zugeordnet. Das Motor-Abwärmesammel- und -Leitsystem dient hingegen als Wärmequelle einer Sekundärheizvorrichtung S, die, in der gezeigten Ausführungsform, vorwiegend der Unterseite des Förderelementes 13 oder dem unteren Trum 13a im Förderkanal 19 zugeordnet ist, und die die Primärheizvorrichtung P mittels der im Betrieb der Förderanlage zwangsweise generierten, gesammelten und entsprechend dirigierten Motorabwärme so weit möglich entlasten soll, um den Energieeinsatz für die Primärheizvorrichtung P zu reduzieren, oder die Primärheizvorrichtung P fallweise sogar ganz abschalten zu können. Die relativen Zuordnungen zur Förderanlage F können auch umgekehrt oder anders gewählt werden.

Die Erfindung besteht darin, in umweltfreundlicher Weise eine Kombination einer Primärheizvorrichtung P, E und einer mit Motorabwärme betriebenen Sekundärheizvorrichtung S zumindest zum teilweisen Entlasten der Primärheizvorrichtung P, E einer solchen Förderanlage F zuzuordnen. In dieser Kombination erlaubt die Sekundärheizvorrichtung eine spürbare Energieeinsparung für die Primärheizvorrichtung, und arbeitet die Primärheizvorrichtung umweltfreundlich.

In der Darstellung in Fig. 2 ist zu erkennen, wie die Umgebungslufteinlässe 16 an einer Luftführung am hinteren Ende der Motorstation 10 z.B. untenliegend angeordnet sind, und die Luftführungen 18 des Motor-Abwärmesammel- und -Leitsystems von der Motorstation 10 in den Förderkanal 19 vorwiegend zum unteren Fördertrum 13a des Förderelementes 13 führen und dieses mit beheizter Abluft 12 beaufschlagen. Die Förderanlage F ist dabei beispielsweise ein Steigförderer mit einem Gummiförderband auf Tragrollen 19, die zum Ausbilden eines Muldenverlaufes relativ zueinander angestellt sein können. Der Förderkanal 19 ist, vorzugsweise, oberseitig abgedeckt.

Bei Einsatz der Förderanlage F in einem Beschicker dient die Förderanlage dazu, erwärmtes bituminöses Einbaugut aus einem Gutbunker des Beschickers zu einem Gutbunker eines dahinter oder seitwärts versetzt fahrenden Straßenfertigers zu fördern. Gegebenenfalls ist der Beschicker mit zwei Förderanlagen ausgestattet, um unterschiedliche Einbaugutsorten zu liefern oder gleichzeitig mehrere Straßenfertiger zu beschicken. Alternativ kann die Förderanlage auch in einen Straßenfertiger eingebaut sein, und zwar entweder als Steigförderer, der eine Einbaugutsorte über die Einbaubohle des Straßenfertigers hinweg zu einem dahinter arbeitenden Straßenfertiger liefert, oder als die üblicherweise im Chassis des Straßenfertigers angeordnete Förderanlage, die Einbaugut aus dem Gutbunker am Frontende des Straßenfertigers durch dessen Chassis zum Chassis-Hinterende und vor die dort angeordneten Verteilerschnecke fördert.

Durch den Betrieb der Förderanlage F beheizt durch die Primärheizvorrichtung P und/oder die Sekundärheizvorrichtung S wird der Effekt des Anklebens von Fördergutes am Förderelement 13 und dessen Führungskomponenten vermindert oder sogar beseitigt, so dass Reinigungsarbeiten einfacher ausfallen bzw. die Frequenz von Reinigungszyklen niedriger sein kann. Beispielsweise werden Komponenten der Förderanlage F zunächst durch beide Heizvorrichtungen P, S aufgeheizt. Die Sekundärheizvorrichtung S wird stets mit voller Leistung betrieben. Die Primärheizvorrichtung P wird z.B. zum Halten einer bestimmten Temperatur geregelt, und schließlich abgeschaltet, wenn die Sekundärheizvorrichtung S allein in der Lage ist, die Temperatur in etwa zu halten.

Bei der in Fig. 1 und 2 gezeigten Ausführungsform sind praktisch sämtliche im Betrieb wärmeabgebende Komponenten des Brennkraftmotors 2 und des von diesem angetriebenen Systeme, z.B. in der Motorstation 10, zusammengefasst, um möglichst viel Abwärme sammeln und in der Sekundärheizvorrichtung S einsetzen zu können. Dies ist jedoch kein unbedingtes Erfordernis, sondern es kann auch die Abwärme von weniger Komponenten oder nur des Brennkraftmotors 2 mit seinem Kühlsystem zum Speisen der Sekundärheizvorrichtung eingesetzt werden. Zweckmäßig ist es, auch das Abgassystem miteinzubeziehen, da dort sehr viel an sich ungenutzte Abwärme entsteht. Diese Abwärme könnte sehr einfach dadurch genutzt werden, dass die Abgase direkt in den Förderkanal 19 geleitet werden. Dies ist aber aus Umweltgründen unzweckmäßig, so dass umweltfreundlicher zumindest ein Teil der Abgas-Abwärme über Wärmetausch gewonnen und in die Sekundärheizvorrichtung S eingespeist wird.

## Patentansprüche

1. Förderanlage (F) für zum Anhaften neigendes Straßenbau-Einbaugut, insbesondere mobile Förderanlage (F), mit wenigstens einem in einem Förderkanal (19) angeordnetem Förderelement (13), das direkt oder indirekt von wenigstens einem Brennkraftmotor (2) antreibbar ist, und einer Primärheizvorrichtung (P) hauptsächlich für das Förderelement (13), wobei die Förderanlage (F) zur zumindest teilweisen Entlastung der Primärheizvorrichtung (P) wenigstens eine Sekundärheizvorrichtung (S) aufweist, **dadurch gekennzeichnet, dass** die wenigstens eine Sekundärheizvorrichtung (S) mit direkter oder indirekter Abwärme des Brennkraftmotors (2) betreibbar ist, und zwar frei von Abgasen des Brennkraftmotors (2) ausschließlich durch die direkte oder indirekte Abwärme des Brennkraftmotors (2).

2. Förderanlage nach Anspruch 1, **dadurch gekennzeichnet, dass** ein vom Brennkraftmotor (2) in den Bereich des Förderelementes (13) führendes Motor-Abluftsammel- und - Leitsystem (10, 18) vorgesehen ist.

3. Förderanlage nach Anspruch 2, **dadurch gekennzeichnet, dass** mit dem Motor-Abluftsammel- und -Leitsystem (10, 18) neben Abwärme des Brennkraftmotors (2) auch Abwärme wenigstens einer zusätzlich Abwärme generierenden, vom Brennkraftmotor (2) direkt oder indirekt angetriebenen Komponente der folgenden Komponenten-Gruppe dem Bereich des Förderelements (13) zuführbar ist: Antriebskomponenten, Bremsen, Abgasleitungen, Hydromotoren, Hydropumpen, Generatoren, Transformatoren.

4. Förderanlage nach einem der vorangehenden Ansprüche, **dadurch gekennzeichnet, dass** die Primärheizvorrichtung (P) eine elektrische Heizvorrichtung (E) und/oder eine Gasheizvorrichtung (G) ist.

5. Förderanlage nach den Anspruch 4, **dadurch gekennzeichnet, dass** die elektrische Primärheizvorrichtung (E) wenigstens einen, vorzugsweise vom Brennkraftmotor (2) antreibbaren, Generator (7) und Infrarotstrahler (15) und/oder Flächenheizkörper und/oder Heizbänder- oder -stäbe aufweist.

6. Förderanlage nach wenigstens einem der Ansprüche 1 bis 5, **dadurch gekennzeichnet, dass** die Primärheizvorrichtung (P) vorwiegend einer Seite und die Sekundärheizvorrichtung (S) vorwiegend einer anderen Seite des Förderelementes (13) oder des Förderkanals (19) zugeordnet sind, vorzugsweise, den Ober- bzw. Unterseiten eines auf Trag- und Umlenkrollen (14) angebrachten Gummiförderbandes eines Steigförderers.

7. Förderanlage nach wenigstens einem der vorhergehenden Ansprüche, **dadurch gekennzeichnet, dass** zumindest der Brennkraftmotor (2) in eine Motorstation (10) eingekapselt ist, und dass die Motorstation (10) wenigstens einen, vorzugsweise zum Boden weisenden, Umgebungslufteinlass (16) aufweist.

8. Förderanlage nach wenigstens einem der vorhergehenden Ansprüche, **dadurch gekennzeichnet, dass** die Sekundärheizvorrichtung (S) eine frei von Abgasen des Brennkraftmotors (2) betriebene Warmluftheizung mit thermisch erzeugter oder aktiv unterstützter Warmluftströmung ist.

9. Förderanlage nach wenigstens einem der vorhergehenden Ansprüche, **dadurch gekennzeichnet, dass** die Förderanlage (F) in eine als Straßenfertiger oder Beschicker ausgebildete Straßenbaumaschine (M) eingebaut ist, und dass der die Wärmequelle für die Sekundärheizung (S) bildende Brennkraftmotor (2) als direkte oder indirekte Antriebsquelle für Fahr- und Funktionskomponenten des Straßenfertigers oder Beschickers und der Förderanlage (F) vorgesehen ist.

10. Förderanlage nach wenigstens einem der vorhergehenden Ansprüche, **dadurch gekennzeichnet, dass** das Förderelement (13) und/oder die Förderanlage (F) nach Aufheizung zumindest über die Primärheizvorrichtung zumindest zeitweise bei abgeschalteter Primärheizvorrichtung (P) nur mittels der Sekundärheizvorrichtung (S) beheizbar ist.

## Claims

1. Transport device (F) for conveying tacky road constructing paving material having a tendency to stick, in particular a mobile transport device (F), comprising:
at least one conveying element (13) accommodated In a conveying channel (19), the conveying element (13) being driven directly or indirectly by at least one combustion engine (2),
and a primary heating device (P) predominantly for the conveying element (13),
the transport device (F) having at least one secondary heating device (S) for at least partially relieving the primary heating device (P).
**characterised in that**
the secondary heating device (S) is operated with direct or indirect waste heat emitted by the combustion engine (2), namely exclusively with direct or indirect waste heat emitted by the combustion engine (2) free of exhaust gases of the combustion engine (2).

2. Transport device according to claim 1, **characterised in that** an engine exit air collecting and/or directing system (10, 18) is provided which extends from the combustion engine (2) into the region of the conveying element (13).

3. Transport device according to claim 2, **characterised in that** by the engine exit air collecting and/or guiding system (10,18) exit heat generated by at least one supplemental exit heat generating component directly or indirectly driven by the combustion engine (2) of the following component group: driving components, brakes, exhaust pipings, hydraulic motors, hydraulic pumps, generators, transformers is supplied to the region of the conveying element (13), in addition to waste heat emitted by the combustion engine (2).

4. Transport device according to one o the preceding claims, **characterised in that** the primary heating device (P) is an electric heating device (E) and/or a gas heating device (G).

5. Transport device according to claim 4, **characterised in that** the electric primary heating device (E) comprises at least one generator (7), preferably driven by the combustion engine (2), and infrared radiators (15) and/or radiant heating bodies and/or heating bands or heating rods.

6. Transport device according to at least one of claims 1 to 5, **characterized in that** the primary heating device (P) is functionally associated predominantly to one side of the conveying element (13) or the conveying channel (19), and that the secondary heating device (S) predominantly is functionally associated to another side of the conveying element (13) or the conveying channel (19), preferably to the upper side and the lower side of a rubber transport belt of an upwardly inclined conveyor, the rubber conveying belt being arranged on carrying rollers and deflection rollers (14).

7. Transport device according to at least one of the preceding claims, **characterised in that** at least the combustion engine (2) is encapsulated into an engine station (10), and that the engine station (10) has at least one inlet opening (16) for ambient air, preferably an inlet opening (16) facing to the ground.

8. Transport device according to at least one of the preceding claims, **characterised in that** the secondary heating device (S) is a warm air heating device operated with a current of warm air thermally produced or actively assisted free of exhaust gases of the combustion engine (2).

9. Transport device according to at least one of the preceding claims, **characterised in that** the transport device (F) is provided in a road construction machine (M) like a road paver or a road paver feeding vehicle, and that the combustion engine (2) as the heat source of the secondary heating device (S) constitutes a direct or indirect driving source for driving components and functional components of the road paver or the road paver feeding vehicle and of the transport device (F).

10. Transport device according to at least one of the preceding claims, **characterised in that** the conveying element (13) and/or the transport device (F) after first being heated up at least by the primary heating device (P) at least temporarily is heated by the secondary heating device (S) only, with the primary heating device (P) switched off.

## Revendications

1. Installation de transport ou de convoyage (F) destiné à un matériau de revêtement routier ayant tendance à adhérer, notamment installation de transport ou de convoyage mobile (F), comprenant au moins un élément de transport (13), qui est agencé dans un canal de transport (19) et qui peut être entraîné directement ou indirectement par au moins un moteur à combustion interne ou moteur thermique (2), et un dispositif de chauffage primaire (P) essentiellement pour l'élément de transport (13), l'installation de transport (F) présentant, pour un délestage au moins partiel du dispositif de chauffage primaire (P), au moins un dispositif de chauffage secondaire (S), **caractérisée en ce que** ledit au moins un dispositif de chauffage secondaire (S) peut fonctionner avec de la chaleur perdue ou dissipée directe ou indirecte du moteur à combustion interne (2), ceci sans gaz d'échappement du moteur à combustion interne (2), exclusivement par la chaleur perdue ou dissipée directe ou indirecte du moteur à combustion interne (2).

2. Installation de transport selon la revendication 1, **caractérisée en ce qu'**il est prévu un système de collecte et de guidage d'air chaud environnant du moteur (10, 18) allant du moteur à combustion interne (2) jusque dans la zone de l'élément de transport (13).

3. Installation de transport selon la revendication 2, **caractérisée en ce qu'**à l'aide du système de collecte et de guidage d'air chaud environnant du moteur (10, 18), il est possible d'amener à la zone de l'élément de transport (13), en plus de la chaleur perdue ou dissipée du moteur à combustion interne (2), également de la chaleur perdue ou dissipée d'au moins un composant, qui produit de la chaleur perdue ou dissipée supplémentaire et est entraîné directement ou indirectement par le moteur à combustion interne (2), parmi ceux du groupe de composants suivant : composant de transmission d'entraînement, freins, conduites de gaz d'échappement, moteurs hydrauliques, pompes hydrauliques, générateurs, transformateurs.

4. Installation de transport selon l'une des revendications précédentes, **caractérisée en ce que** le dispositif de chauffage primaire (P) est un dispositif de chauffage électrique (E) et/ou un dispositif de chauffage au gaz (G).

5. Installation de transport selon la revendication 4, **caractérisée en ce que** le dispositif de chauffage primaire électrique (E) comprend au moins un générateur (7), pouvant de préférence être entraîné par le moteur à combustion interne (2), et des éléments de rayonnement à infrarouge (15) et/ou des corps chauffants de surface et/ou des bandes chauffantes ou barreaux chauffants.

6. Installation de transport selon l'une au moins des revendications précédentes, **caractérisée en ce que** le dispositif de chauffage primaire (P) est associé essentiellement à un côté, et le dispositif de chauffage secondaire (S) essentiellement à un autre côté de l'élément de transport (13) ou du canal de transport (19), de préférence respectivement au côté supérieur et au côté inférieur d'une bande de transport en caoutchouc d'un transporteur ou convoyeur ascensionnel, placée sur des rouleaux porteurs et des rouleaux de renvoi (14).

7. Installation de transport selon l'une au moins des revendications précédentes, **caractérisée en ce qu'**au moins le moteur à combustion interne (2) est encapsulé dans un poste de motorisation (10), et **en ce que** le poste de motorisation (10) présente au moins une ouverture d'entrée d'air environnant (16), de préférence dirigée vers le sol.

8. Installation de transport selon l'une au moins des revendications précédentes, **caractérisée en ce que** le dispositif de chauffage secondaire (S) et un chauffage à air chaud fonctionnant sans gaz d'échappement du moteur à combustion interne (2) et présentant un flux d'air chaud produit par voie thermique ou par une assistance active.

9. Installation de transport selon l'une au moins des revendications précédentes, **caractérisée en ce que** l'installation de transport (F) est montée dans un engin de construction de route ou de travaux publics (M) se présentant sous la forme d'un finisseur de route ou d'un alimentateur, et **en ce que** le moteur à combustion interne (2) constituant la source de chaleur pour le dispositif de chauffage secondaire (S), est prévu en tant que source d'entraînement directe ou indirecte pour des composants de circulation et fonctionnels du finisseur de route ou de l'alimentateur et de l'installation de transport (F).

10. Installation de transport selon l'une au moins des revendications précédentes, **caractérisée en ce que** l'élément de transport (13) et/ou l'installation de transport (F), après échauffement au moins par l'intermédiaire du dispositif de chauffage primaire, peuvent être chauffés, au moins temporairement, lorsque le dispositif de chauffage primaire (P) est à l'arrêt, uniquement au moyen du dispositif de chauffage secondaire (S).
